# FASCICULE DE BREVET EUROPEEN

(11) **EP 3 788 283 B1**
(45) Date de publication et mention de la délivrance du brevet: **03.11.2021**
(21) Numéro de dépôt: 19729340.0
(22) Date de dépôt: 02.05.2019
(51) Int. Cl.: F16K 1/22, F16K 11/052, F16K 5/04, F16K 11/085, B64D 13/00

(54) **SYSTÈME DE PRÉLÈVEMENT D'AIR EQUIPÉ D'UNE VANNE DE SURPRESSION**
LUFTPROBENAHMESYSTEM MIT EINEM ÜBERDRUCKVENTIL
AIR SAMPLING SYSTEM EQUIPPED WITH AN OVERPRESSURE VALVE

(30) Priorité: 04.05.2018 FR 1853858
(43) Date de publication de la demande: 10.03.2021
(73) Titulaire: Liebherr-Aerospace Toulouse SAS, 31200 Toulouse (FR)
(72) Inventeur: MANCHO, Jean-Luc, 31016 TOULOUSE Cedex 2 (FR); MAURY, Damien, 31016 TOULOUSE Cedex 2 (FR); BRISTIEL, Frédéric, 31016 TOULOUSE Cedex 2 (FR)
(74) Mandataire: Bringer IP
(86) Numéro de dépôt international: PCT/FR2019/051015
(87) Numéro de publication internationale: WO 2019/211566

(56) Documents cités:
- EP-A1- 0 934 876
- EP-A2- 1 147 986
- DE-A1- 2 847 038
- GB-A- 1 321 897
- US-A- 3 386 461
- US-A- 6 161 582
- US-A1- 2004 250 862
- US-B1- 6 446 667

## Description

### 1. Domaine technique de l'invention

L'invention concerne un système de prélèvement d'air d'un aéronef équipé d'une vanne de surpression. L'invention concerne plus particulièrement une vanne de surpression d'air destinée à équiper un système de prélèvement d'air, par exemple pour alimenter un système de conditionnement d'air d'un aéronef.

### 2. Arrière-plan technologique

Un système de conditionnement d'air d'un aéronef et d'une manière générale tout équipement d'un aéronef fonctionnant à partir ou avec un flux d'air est alimenté en air, directement ou indirectement, par un système de prélèvement d'air comprenant un port de prélèvement d'air ménagé sur un moteur propulsif de l'aéronef, une conduite de prélèvement d'air adaptée pour véhiculer l'air prélevé vers cet équipement, un capteur de pression adapté pour mesurer la pression d'air dans ladite conduite de prélèvement et/ou dans ledit équipement d'air et une vanne de surpression (plus connue sous la dénomination anglaise de « Over Pressure Valve » ou son acronyme OPV) montée dans la conduite de prélèvement d'air et configurée pour isoler la conduite de prélèvement d'air lorsqu'une surpression est détectée par le capteur de pression de manière à protéger l'équipement. Selon certaines variantes, le système de conditionnement est dépourvu d'un capteur de pression et la vanne OPV bascule en position fermée sous l'action d'un clapet taré dès qu'une niveau de pression est atteint.

Un tel système est connu par exemple de EP0934876A1

La fermeture de la vanne de surpression génère une augmentation de pression dans la conduite de prélèvement d'air qu'il est nécessaire de décharger pour ne pas dépasser les niveaux de pression admissibles.

Cette décharge de pression est en général réalisée par des clapets de décharge, plus connus sous la dénomination anglaise de « Duct Vent Valve » ou son acronyme DVV. Ces clapets de décharge sont donc configurés pour pouvoir décharger une partie de l'air bloqué dans la conduite de prélèvement en amont de la vanne de surpression lorsque cet air atteint un seuil prédéterminé.

L'un des inconvénients des solutions actuelles réside dans le fait qu'il est nécessaire de piloter le clapet de décharge indépendamment de la vanne de surpression alors que le seuil de décharge et le seuil de fermeture de la vanne de surpression peuvent être identiques. Autrement dit, le clapet de décharge peut être activé pour un niveau de pression prédéterminé qui est le niveau de pression qui peut commander le basculement de la vanne de surpression d'une position ouverte dans laquelle l'air peut librement circuler dans la conduite de prélèvement à une position fermée dans laquelle la vanne empêche toute circulation d'air vers les équipements agencés en aval de la vanne.

En outre, les deux systèmes étant indépendants l'un de l'autre, ils sont chacun indépendamment l'un de l'autre susceptibles de rencontrer une panne critique pour l'intégrité du système de conditionnement d'air qu'ils équipent.

Les inventeurs ont donc cherché à développer un nouvel équipement qui puisse assurer simultanément une fonction d'isolement d'une conduite de prélèvement et une fonction de décharge d'air.

### 3. Objectifs de l'invention

L'invention vise à fournir un système de prélèvement d'air d'un aéronef équipé d'une vanne de surpression qui pallie au moins certains des inconvénients des systèmes d'air connus.

L'invention vise en particulier à fournir, un système de prélèvement d'air comprenant une vanne de suppression qui peut assurer simultanément une fonction d'isolement d'une conduite d'air sur laquelle elle est installée et une fonction de décharge d'air.

L'invention vise également à fournir, dans au moins un mode de réalisation, un système de prélèvement d'air comprenant une vanne de surpression configurée pour équiper un système de conditionnement d'air un aéronef.

L'invention vise également à fournir, dans au moins un mode de réalisation de l'invention, un système de prélèvement d'air comprenant une telle vanne qui permet de réduire les coûts des systèmes actuels.

### 4. Exposé de l'invention

Pour ce faire, l'invention concerne un système de prélèvement d'air comprenant un port de prélèvement d'air ménagé sur un moteur d'un aéronef, une conduite d'alimentation d'air adaptée pour être mise en communication de fluide avec un équipement de l'aéronef, un capteur de pression adapté pour mesurer la pression d'air dans ladite conduite d'alimentation et/ou dans ledit équipement d'air, une vanne de surpression montée dans ladite conduite d'alimentation d'air et configurée pour bloquer l'alimentation en air dudit équipement en cas de surpression détectée par ledit capteur de pression, la vanne de surpression comprennant:
- un corps de vanne comprenant une entrée d'air, une sortie d'air et un conduit de circulation d'air agencé entre l'entrée d'air et la sortie d'air et qui s'étend selon une direction, dite direction longitudinale,
- un organe d'obturation monté pivotant dans ledit conduit de circulation d'air autour d'un axe de pivotement, entre une position ouverte dans laquelle l'air peut librement circuler de ladite entrée d'air vers ladite sortie d'air, et une position fermée dans laquelle ledit organe d'obturation présente une surface, dite face amont qui s'étend en travers du conduit de circulation de manière à empêcher toute circulation d'air vers ladite sortie d'air.

Un système de prélèvement d'air selon l'invention est caractérisé en ce que ladite vanne de surpression comprend:
- au moins un canal de décharge d'air traversant ledit corps de vanne et configuré pour pouvoir mettre spontanément en communication fluidique, lorsque ledit organe d'obturation est dans ladite position fermée, au moins un orifice de décharge d'air formé sur ladite face amont dudit organe d'obturation et au moins un orifice d'évacuation d'air qui débouche à l'extérieur du conduit de circulation d'air.

Un système de prélèvement d'air selon l'invention comprend une vanne qui présente donc la particularité d'intégrer un canal de décharge d'air qui est configuré pour mettre en communication fluidique un orifice de décharge agencé sur la face amont de l'organe d'obturation de la vanne et un orifice d'évacuation d'air qui débouche à l'extérieur du conduit de circulation de la vanne, lorsque la vanne est en position fermée, c'est-à-dire lorsque l'organe d'obturation s'étend en travers du conduit de circulation d'air en bloquant toute circulation d'air dans le conduit de circulation d'air, en aval de l'organe d'obturation.

Aussi, une commande de fermeture de l'organe d'obturation (aussi désigné par le terme « obturateur » dans la suite) déclenche automatiquement et spontanément l'ouverture du canal de décharge, c'est-à-dire, la mise en communication d'air de l'orifice de décharge agencé sur la face amont de l'obturateur et l'orifice d'évacuation d'air qui débouche à l'extérieur du conduit de circulation. Ainsi, l'air bloqué à l'intérieur du conduit de circulation d'air en amont de l'organe d'obturation peut être évacué à l'extérieur du conduit de circulation. Cette décharge d'air est assurée par l'admission d'air dans l'orifice de décharge formé sur la face amont de l'organe d'obturation, la circulation d'air dans le canal de décharge relié à l'orifice d'évacuation d'air, lorsque la vanne est dans la position fermée, puis à son rejet par l'orifice d'évacuation.

L'air de décharge n'est pas évacué en aval de l'organe d'obturation, mais à l'extérieur du corps de vanne, ce qui permet d'isoler parfaitement les équipements en aval de la vanne, tout en assurant la décharge de l'air bloqué en amont de l'obturateur.

Ainsi, un système d'air selon l'invention n'a plus besoin d'être équipé d'un clapet de décharge additionnel dans la mesure où la vanne de surpression fait à la fois office de moyen d'isolement de la conduite d'alimentation et de moyen de décharge d'air.

Avantageusement et selon l'invention, au moins un canal de décharge est ménagé dans ledit organe d'obturation.

Selon cette variante avantageuse, le canal de décharge est intégralement porté par l'obturateur de telle sorte que le pivotement de l'obturateur de la position ouverte vers la position fermée déplace le canal de décharge vers une position dans laquelle il met en communication de fluide l'orifice de décharge et l'orifice d'évacuation.

Avantageusement et selon l'invention, au moins un canal de décharge comprend un tronçon amont alimenté par ledit orifice de décharge, un tronçon aval adapté pour être en communication de fluide avec ledit orifice d'évacuation d'air lorsque ledit organe d'obturation est dans ladite position fermée, et un tronçon intermédiaire s'étendant entre lesdits tronçons amont et aval.

Cette variante avantageuse permet de former un canal de décharge formé d'une succession d'au moins trois tronçons, ce qui permet de former un circuit de décharge adapté à la forme de l'organe d'obturation. Ce circuit peut notamment être adapté selon les applications aux formes et dimensions de l'organe d'obturation.

Avantageusement et selon cette variante, ledit organe d'obturation comprend un arbre de pivotement s'étendant le long dudit axe de pivotement adapté pour être entrainé en pivotement par un actionneur de vanne pour se déplacer de la position ouverte à la position fermée, ledit arbre de pivotement hébergeant lesdits tronçon amont, intermédiaire et aval dudit canal de décharge.

Selon cette variante, la vanne comprend un arbre de pivotement dudit obturateur adapté pour être piloté par un actionneur de vanne qui héberge un tronçon amont alimenté par l'orifice de décharge de l'obturateur, un tronçon aval adapté pour être en communication de fluide avec l'orifice d'évacuation d'air lorsque l'obturateur est dans ladite position fermée, et un tronçon intermédiaire s'étendant entre lesdits tronçons amont et aval. L'arbre de pivotement et le tronçon intermédiaire peuvent par exemple s'étendre radialement.

Le canal de décharge est donc logé dans l'arbre de pivotement de l'obturateur de sorte que le canal pivote avec l'arbre de pivotement et comprend au moins un tronçon amont, un tronçon intermédiaire et un tronçon aval solidaires les uns des autres. Le tronçon amont débouche dans l'orifice de décharge formé sur la face amont de l'obturateur. Le pivotement de l'arbre de pivotement de la position ouverte de la vanne à la position fermée de la vanne permet de déplacer les tronçons et en particulier le tronçon aval d'une position dans laquelle il n'est pas en communication de fluide avec l'orifice d'évacuation d'air à une position dans laquelle il est en communication de fluide avec l'orifice d'évacuation. L'orifice d'évacuation est fixe par rapport au corps de vanne et c'est le pivotement de l'arbre de pivotement qui permet de mettre ou non le canal de décharge en communication de fluide avec cet orifice d'évacuation. En d'autres termes et selon cette variante, l'interface de communication fluidique entre l'air en amont de la vanne et l'orifice d'évacuation se situe au niveau du tronçon aval.

Selon une autre variante, le canal de décharge est fixe par rapport au corps de vanne de sorte qu'il est en communication de fluide avec l'orifice d'évacuation. En outre, l'obturateur est monté mobile autour du canal de décharge de sorte que l'orifice de décharge de l'obturateur se trouve en communication de fluide avec une bouche d'entrée du canal de décharge lorsque l'obturateur est dans la position fermée et se trouve en regard d'une paroi du canal de décharge bloquant toute circulation d'air dans le canal de décharge lorsque ledit obturateur est dans la position ouverte. En d'autres termes et selon cette variante, l'interface de communication fluidique entre l'air en amont de la vanne et l'orifice d'évacuation se situe au niveau de l'orifice de décharge de l'obturateur.

Avantageusement et selon l'invention, ledit orifice d'évacuation d'air est porté par un mamelon de décharge configuré pour pouvoir être relié à une conduite d'évacuation d'air permettant d'évacuer l'air à distance de ladite vanne.

Cette variante avantageuse permet de déporter l'évacuation d'air déchargé à distance de la vanne en prévoyant un mamelon de décharge sur lequel une conduite d'évacuation peut être branchée. Cette conduite peut ensuite être agencée de manière à conduire le fluide déchargé vers une zone de décharge souhaitée.

Avantageusement et selon cette variante, ledit mamelon de décharge s'étend selon une direction perpendiculaire audit axe de pivotement de l'organe d'obturation.

Selon une autre variante, ledit mamelon de décharge s'étend selon une direction parallèle audit axe de pivotement de l'organe d'obturation.

Avantageusement et selon l'invention, ledit mamelon de décharge comprend en outre un dispositif d'étanchéité dynamique configuré pour limiter les fuites d'air lorsque ledit organe d'obturation est dans la position ouverte.

Cette variante avantageuse permet de limiter la fuite d'air lorsque la vanne est en position ouverte et que le canal de décharge n'est pas en communication de fluide avec le mamelon de sortie. Cela permet d'étanchéifier l'interface de communication fluidique entre l'air en amont de la vanne et le mamelon d'évacuation se situe au niveau du tronçon aval.

Avantageusement et selon l'invention, ledit dispositif d'étanchéité dynamique comprend un boisseau tubulaire s'étendant à l'intérieur dudit mamelon de décharge monté coulissant sur un joint - par exemple un joint torique - et maintenu en position contre ledit organe d'obturation (ou contre l'arbre de pivotement dans le cas où l'organe d'obturation comprend un tel arbre de pivotement) par un ressort.

Selon une autre variante, le boisseau tubulaire est remplacé par une bague d'étanchéité.

Avantageusement et selon l'invention, ledit arbre de rotation dudit obturateur est porté par des paliers ou des roulements à bille.

Avantageusement et selon l'invention, ladite vanne de surpression est une vanne papillon ou une vanne à boisseau. Plus particulièrement, ledit organe d'obturation est un papillon de sorte que ladite vanne forme une vanne papillon, ou un boisseau de sorte que ladite vanne forme une vanne à boisseau.

En d'autres termes, un système de prélèvement d'air selon l'invention comprend une vanne qui est avantageusement une vanne papillon, auquel cas l'organe d'obturation est un papillon monté pivotant dans le conduit de circulation d'air autour de l'axe de pivotement ou une vanne à boisseau, auquel cas l'organe d'obturation est un boisseau monté pivotant dans le conduit de circulation d'air autour de l'axe de pivotement.

Dans le cas où l'obturateur est un boisseau, le canal de décharge est avantageusement formé dans le boisseau. Dans le cas où l'obturateur est un papillon, le canal de décharge est avantageusement formé dans l'arbre de pivotement du papillon. L'invention concerne également un système de conditionnement d'air d'une cabine d'un aéronef voire un système d'air d'un véhicule de transport aérien ou ferroviaire caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure la est une vue schématique en coupe d'une vanne papillon d'un système de prélèvement d'air selon un mode de réalisation de l'invention en position ouverte,
- la figure 1b est une vue schématique en coupe de la vanne papillon d'un système de prélèvement d'air selon le mode de réalisation de la figure la en position fermée,
- la figure 2a est une vue schématique en coupe d'une vanne à boisseau d'un système de prélèvement d'air selon un mode de réalisation de l'invention en position ouverte,
- la figure 2b est une vue schématique en coupe de la vanne à boisseau d'un système de prélèvement d'air selon le mode de réalisation de la figure 2a en position fermée,
- la figure 3a est une vue schématique en coupe d'une vanne à boisseau d'un système de prélèvement d'air selon un autre mode de réalisation de l'invention en position ouverte,
- la figure 3b est une vue schématique en coupe de la vanne à boisseau d'un système de prélèvement d'air selon le mode de réalisation de la figure 3a en position fermée,
- la figure 4a est une vue schématique en coupe d'une vanne à boisseau d'un système de prélèvement d'air selon un autre mode de réalisation de l'invention en position ouverte,
- la figure 4b est une vue schématique en coupe de la vanne à boisseau d'un système de prélèvement d'air selon le mode de réalisation de la figure 4a en position fermée,
- la figure 5 est une vue schématique d'un système de prélèvement d'air selon un mode de réalisation de l'invention.

### 6. Description détaillée d'un mode de réalisation de l'invention

Sur les figures, les échelles et les proportions ne sont pas strictement respectées et ce, à des fins d'illustration et de clarté.

Les éléments identiques, similaires ou analogues sont désignés par les mêmes références dans toutes les figures.

Les termes axial et radial sont utilisés à titre non limitatif en référence à l'axe principal 10 qui définit la direction de circulation d'air dans la vanne lorsque la vanne est en position ouverte. Cet axe principal 10 s'étend le long d'une direction, dite direction longitudinale.

Dans toute la description détaillée, le système de prélèvement d'air considéré comprend une vanne de surpression d'air. Cela étant, l'homme du métier comprendra que les enseignements suivants peuvent s'appliquer à tout autre type de système d'air d'un aéronef, tel qu'un système de ventilation, un système de conditionnement d'air ou encore un système de refroidissement d'air.

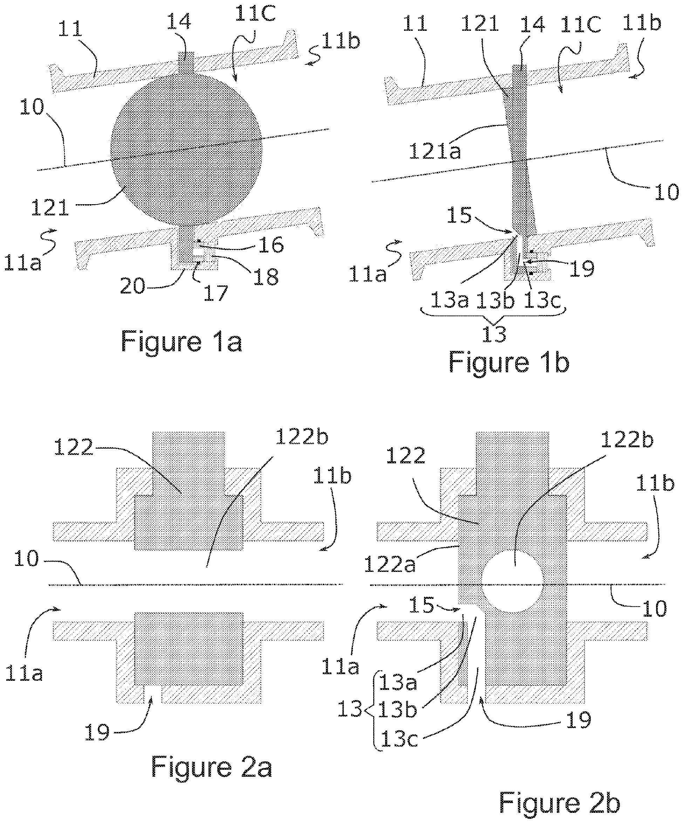

Les figures 1a et 1b illustrent schématiquement une vanne d'un système de prélèvement d'air selon un mode de réalisation de l'invention, respectivement en position ouverte et fermée. La vanne selon ce mode de réalisation de l'invention est une vanne papillon, c'est à dire une vanne dont l'organe d'obturation est un papillon 121.

Cette vanne papillon comprend un corps 11 de vanne comprenant une entrée 11a d'air, une sortie 11b d'air et un conduit 11c de circulation d'air qui s'étend selon l'axe principal 10. Lorsque la vanne est en position ouverte, l'air entre dans la vanne par l'entrée 11a d'air, circule dans le conduit 11c de circulation d'air et sort de la vanne par la sortie 11b d'air.

La vanne comprend en outre un papillon 121 monté pivotant dans le conduit 11c de circulation d'air autour d'un axe de pivotement qui s'étend sensiblement perpendiculairement à l'axe principal 10. Ce papillon 121 est configuré pour pouvoir être déplacé d'une position ouverte (correspondant à la figure 1a) à une position fermée (correspondant à la figure 1b). Dans la position ouverte, représentée par la figure 1a, l'air peut librement circuler de l'entrée d'air 11a vers la sortie 11b d'air en passant de part et d'autre du papillon 121 qui s'étend alors dans l'axe du conduit de circulation d'air 11c. Dans la position fermée, représentée par la figure 1b, le papillon 121 présente une face amont 121a qui s'étend perpendiculairement à la direction principale 10 et empêche toute circulation d'air vers la sortie 11b d'air.

Le papillon 121 est entrainé en pivotement autour de son axe de pivotement par un actionneur de vanne, qui est par exemple un actionneur électrique, lui-même piloté par une unité de commande associée au système de conditionnement d'air équipé par la vanne selon l'invention. L'actionneur de vanne est configuré pour pouvoir entrainer le pivotement d'un arbre 14 de vanne solidaire du papillon 121. Cet arbre 14 est par exemple monté sur des paliers non représentés sur les figures à des fins de clarté. Selon un autre mode de réalisation, les paliers peuvent être remplacés par des roulements à bille ou tous moyens équivalents.

Cet arbre 14 de vanne héberge, tel que représenté schématiquement sur la figure 1b un canal de décharge 13 d'air qui traverse le corps 11 de vanne. Ce canal de décharge comprend un tronçon amont 13a alimenté par un orifice 15 de décharge formé sur la face amont 121a du papillon 121, un tronçon 13c aval adapté pour être mis en communication d'air avec un mamelon 20 d'évacuation d'air et un tronçon intermédiaire 13b qui relie entre eux les tronçons amont 13a et aval 13c. Le mamelon 20 d'évacuation porte un orifice 19 d'évacuation d'air de décharge vers l'extérieur du conduit de circulation d'air 11c.

Sur la figure 1b, la vanne est en position fermée. Dans cette position, l'orifice 15 de décharge d'air formé sur la face amont du papillon 121 est en communication de fluide avec le tronçon amont 13a, qui est lui-même en communication de fluide avec le tronçon intermédiaire 13b, qui est lui-même en communication de fluide avec le tronçon aval 13c, qui est lui-même en communication de fluide avec le mamelon 20 d'évacuation d'air. En d'autres termes, lorsque la vanne est en position fermée, un circuit de décharge formé par l'orifice de décharge 15, le tronçon amont 13a, le tronçon intermédiaire 13b, le tronçon aval 13c et le mamelon 20 d'évacuation qui porte l'orifice d'évacuation 19, permet de mettre en communication de fluide une zone en amont du papillon 121 avec une zone à l'extérieur du corps 11 de la vanne.

Cet agencement permet donc de décharger l'air présent dans la zone en amont du papillon lorsque le papillon est fermé et ainsi de baisser la pression d'air dans cette zone.

Sur la figure 1a, la vanne est en position ouverte. Dans cette position, le tronçon aval 13c n'est pas en communication de fluide avec le mamelon 20 d'évacuation d'air. En effet, les tronçons étant formés dans l'arbre 14 de pivotement du papillon 121, lorsque la vanne est en position ouverte, le tronçon aval 13c se trouve dans une position pivotée de 90 degrés par rapport à la position de la figure 1b de sorte qu'il n'est plus en regard du mamelon 15 d'évacuation d'air.

En d'autres termes, dans la position ouverte, l'orifice 15 de décharge d'air formé sur la face amont du papillon 121 est toujours en communication de fluide avec le tronçon amont 13a, qui est lui-même toujours en communication de fluide avec le tronçon intermédiaire 13b, qui est lui-même toujours en communication de fluide avec le tronçon aval 13c. En revanche, le tronçon aval 13c n'est plus en communication de fluide avec le mamelon 20 d'évacuation. Aussi, l'air en amont du papillon 121 ne peut plus être déchargé vers l'extérieur du corps de vanne.

L'étanchéité d'air est assurée dans la position ouverte de la vanne par un boisseau 16 tubulaire qui s'étend à l'intérieur du mamelon 20 de décharge et qui est monté coulissant sur un joint, par exemple un joint torique 17, et maintenu en position contre l'arbre 14 de pivotement du papillon par un ressort 18. Cela permet de limiter les fuites d'air et d'éviter que l'air présent en amont du papillon se décharge lorsque la vanne n'est pas en position de surpression.

Les figures 2a et 2b illustrent schématiquement une vanne selon un autre mode de réalisation de l'invention, respectivement en position ouverte et fermée. La vanne selon ce mode de réalisation de l'invention est une vanne à boisseau, c'est à dire une vanne dont l'organe d'obturation est un boisseau 122. Un tel boisseau comprend un corps de boisseau et un alésage 122b central permettant de laisser passer l'air à travers le corps de boisseau lorsque le boisseau est dans la position ouverte. Sur la figure 2b, le boisseau 122 est pivoté de 90 degrés autour de son axe de pivotement qui s'étend perpendiculairement à l'axe principal 10, par rapport à sa position de la figure 2a.

Cette vanne comprend également un corps 11 de vanne comprenant une entrée 11a d'air, une sortie 11b d'air et un conduit 11c de circulation d'air qui s'étend selon l'axe principal 10. Lorsque la vanne est en position ouverte, l'air entre dans la vanne par l'entrée 11a d'air, circule dans le conduit 11c de circulation d'air, en passant à travers l'alésage 122b central du boisseau et sort de la vanne par la sortie 11b d'air.

Le boisseau 122 est configuré pour pouvoir être déplacé d'une position ouverte (correspondant à la figure 2a) à une position fermée (correspondant à la figure 2b). Dans la position ouverte, représentée par la figure 2a, l'air peut librement circuler de l'entrée 11a d'air vers la sortie 11b d'air. Dans la position fermée, représentée par la figure 2b, l'alésage 122b central du boisseau n'est plus dans l'axe du conduit de circulation de sorte que le corps de boisseau s'étend dans le conduit de circulation d'air en présentant une surface, dite face amont 122a, qui empêche le passage d'air vers la sortie 11b d'air.

Le boisseau 122 héberge un canal 13 de décharge qui permet de mettre en communication de fluide, lorsqu'il est dans la position fermée, un orifice 15 de décharge d'air formé sur la face amont 122a du boisseau 122 et un orifice d'évacuation 19 qui débouche à l'extérieur de la vanne. Le canal 13 de décharge est formé d'un tronçon amont 13a qui s'étend parallèlement à l'axe principal 10, un tronçon aval 13c qui s'étend perpendiculairement à l'axe principal 10 de sorte que l'évacuation d'air s'effectue radialement et un tronçon intermédiaire 13b qui relie les tronçons amont et aval et qui s'étend globalement à 45° de l'axe principal 10 sur la figure 2b.

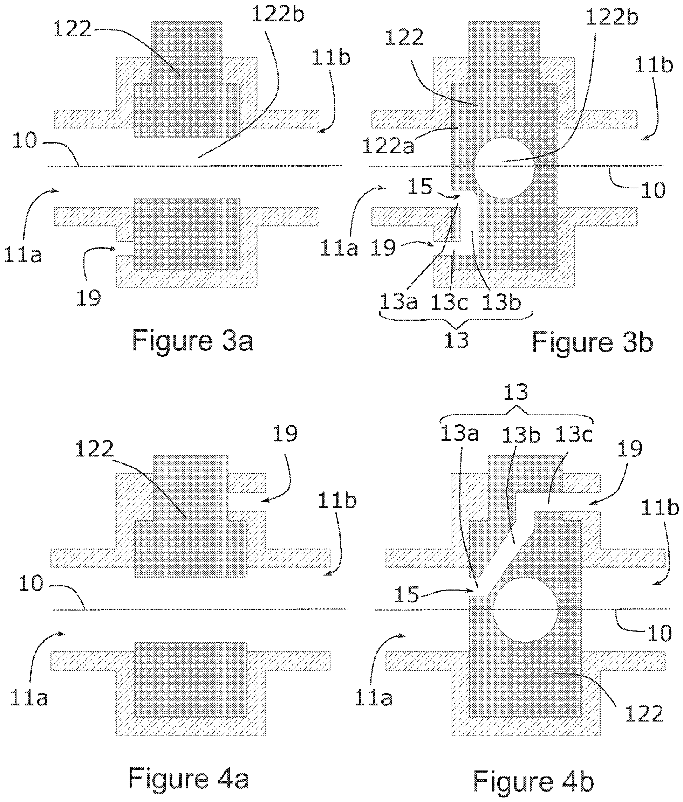

Les figures 3a et 3b illustrent une variante de la vanne des figures 2a et 2b. La principale différence dans ce mode de réalisation est la réalisation du canal 13 de décharge. Ce canal 13 de décharge comprend un tronçon amont 13a et un tronçon aval 13c qui s'étendent chacun parallèlement à l'axe principal 10 et un canal intermédiaire 13b qui s'étend radialement et qui relie les tronçons amont et aval. L'orifice d'évacuation 19 débouche donc, dans ce mode de réalisation, parallèlement à l'axe principal 10.

Les figures 4a et 4b illustrent une variante de la vanne des figures 2a, 2b, 3a et 3c. La principale différence dans ce mode de réalisation est la réalisation du canal 13 de décharge. Ce canal 13 de décharge comprend un tronçon amont 13a et un tronçon aval qui s'étendent chacun parallèlement à l'axe principal 10 et un canal intermédiaire qui s'étend obliquement en formant un coude entre les tronçons amont et aval. L'orifice d'évacuation 19 débouche, dans ce mode de réalisation, parallèlement à l'axe principal 10, sur la partie supérieure de la vanne.

Bien entendu, d'autres modes de réalisation sont possibles pour réaliser le canal de décharge dans le boisseau 122 ou dans l'arbre du papillon 121, à partir du moment où le canal de décharge permet de mettre en communication de fluide la zone en amont de l'organe d'obturation et une zone à l'extérieur du corps de vanne lorsque l'organe d'obturation est dans la position fermée.

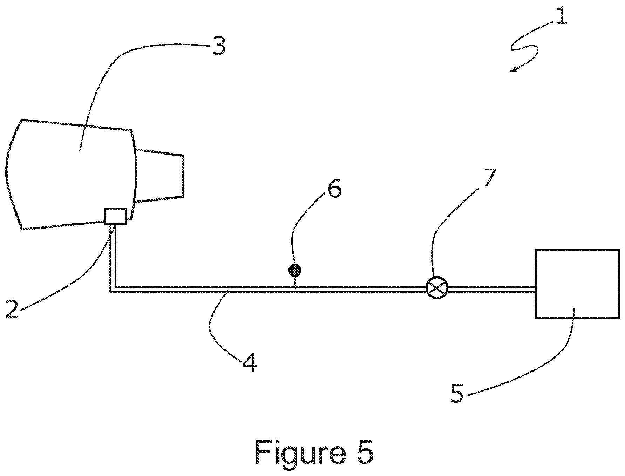

La figure 5 illustre un système 1 de prélèvement d'air comprenant un moteur 3 d'un aéronef sur lequel est prélevé de l'air à partir d'un port de prélèvement 2 adapté pour alimenter en air l'équipement 5 de l'aéronef par le biais d'une conduite 4 d'alimentation d'air. Un capteur 6 de pression est agencé dans ladite conduite d'alimentation d'air en amont de la vanne 7 de surpression afin de pouvoir bloquer l'alimentation en air de l'équipement 5 de l'aéronef lorsque le capteur 6 détecte une surpression.

Selon un autre mode de réalisation, non représenté, le capteur 6 peut être agencé dans ladite conduite d'alimentation en aval de la vanne 7.

Selon un autre mode de réalisation, le capteur 6 mesure la pression dans l'équipement 5.

Le capteur 6 peut être de tout type. Selon un mode de réalisation, le capteur 6 peut être remplacé par un clapet taré directement intégré à la vanne ou tout moyen équivalent.

A noter par ailleurs qu'une vanne de suppression d'un système de prélèvement d'air selon l'invention pourrait être utilisée sur un système de conditionnement d'air d'une cabine d'un aéronef voire sur un système d'air d'un véhicule de transport aérien ou ferroviaire.

## Revendications

1. Système (1) de prélèvement d'air comprenant un port (2) de prélèvement d'air ménagé sur un moteur (3) d'un aéronef, une conduite (4) d'alimentation d'air adaptée pour être mise en communication de fluide avec un équipement (5) de l'aéronef, un capteur (6) de pression adapté pour mesurer la pression d'air dans ladite conduite (4) d'alimentation et/ou dans ledit équipement (5) d'air, une vanne (7) de surpression montée dans ladite conduite d'alimentation d'air et configurée pour bloquer l'alimentation en air dudit équipement en cas de surpression détectée par ledit capteur de pression, ladite vanne de surpression comprennant :
- un corps (11) de vanne comprenant une entrée (11a) d'air, une sortie (11b) d'air et un conduit (11c) de circulation d'air agencé entre l'entrée (11a) d'air et la sortie (11b) d'air et qui s'étend selon une direction, dite direction longitudinale (10),
- un organe d'obturation (121, 122) monté pivotant dans ledit conduit (11c) de circulation d'air autour d'un axe de pivotement, entre une position ouverte dans laquelle l'air peut librement circuler de ladite entrée (11a) d'air vers ladite sortie (11b) d'air, et une position fermée dans laquelle ledit organe d'obturation présente une surface, dite face amont (121a, 122a) qui s'étend en travers du conduit de circulation de manière à empêcher toute circulation d'air vers ladite sortie (11b) d'air,
**caractérisé en ce que** ladite vanne de surpression comprend :
- au moins un canal (13) de décharge d'air traversant ledit corps (11) de vanne et configuré pour pouvoir mettre spontanément en communication fluidique, lorsque ledit organe d'obturation est dans ladite position fermée, au moins un orifice (15) de décharge d'air formé sur ladite face amont dudit organe d'obturation et au moins un orifice d'évacuation (19) d'air qui débouche à l'extérieur du conduit de circulation d'air.

2. Système de prélèvement d'air e selon la revendication 1, **caractérisé en ce qu'**au moins un canal (13) de décharge est ménagé dans ledit organe d'obturation (121, 122).

3. Système de prélèvement d'air selon l'une des revendications 1 ou 2, **caractérisé en ce qu'**au moins un canal (13) de décharge comprend un tronçon amont (13a) alimenté par ledit orifice (15) de décharge, un tronçon aval (13c) adapté pour pouvoir être mis en communication de fluide avec ledit orifice d'évacuation d'air lorsque ledit organe d'obturation est dans ladite position fermée, et un tronçon intermédiaire (13b) reliant lesdits tronçons amont et aval.

4. Système de prélèvement d'air selon la revendication 3, **caractérisé en ce que** ledit organe d'obturation (121) comprend un arbre (14) de pivotement s'étendant le long dudit axe de pivotement adapté pour être entrainé en pivotement par un actionneur de vanne pour se déplacer de la position ouverte à la position fermée, ledit arbre (14) de pivotement hébergeant lesdits tronçon amont, intermédiaire et aval dudit canal de décharge.

5. Système de prélèvement d'air selon la revendication 4, **caractérisé en ce que** ledit arbre (14) de pivotement et ledit tronçon intermédiaire s'étendent radialement.

6. Système de prélèvement d'air selon l'une des revendications 1 à 5, **caractérisé en ce que** ledit orifice d'évacuation (19) d'air est porté par un mamelon (20) de décharge configuré pour pouvoir être relié à une conduite d'évacuation d'air permettant d'évacuer l'air à distance de ladite vanne.

7. Système de prélèvement d'air selon la revendication 6, **caractérisé en ce que** ledit mamelon (20) de décharge s'étend selon une direction perpendiculaire audit axe de pivotement de l'organe d'obturation ou selon une direction parallèle à l'axe de pivotement de l'organe d'obturation.

8. Système de prélèvement d'air selon l'une des revendications 6 ou 7, **caractérisée en ce que** ledit mamelon (20) de décharge comprend en outre un dispositif d'étanchéité dynamique configuré pour limiter les fuites d'air lorsque ledit organe d'obturation est dans ladite position ouverte.

9. Système de prélèvement d'air selon la revendication 8, **caractérisé en ce que** ledit dispositif d'étanchéité dynamique comprend un boisseau (16) tubulaire s'étendant à l'intérieur dudit mamelon (20) de décharge, monté coulissant sur un joint torique (17) et maintenu en position contre ledit organe d'obturation par un ressort (18).

10. Système de prélèvement d'air selon l'une des revendications 1 à 9, **caractérisé en ce que** ladite vanne de surpression est une vanne papillon ou une vanne à boisseau.

## Patentansprüche

1. Entlüftungssystem (1), umfassend eine Entlüftungsöffnung (2), die an einem Triebwerk (3) eines Flugzeugs vorgesehen ist, eine Luftzufuhrleitung (4), die ausgestaltet ist, mit einer Luftausrüstung (5) des Flugzeugs in Fluidverbindung zu stehen, einen Drucksensor (6), der zum Messen des Luftdrucks in der Zufuhrleitung (4) und/oder in der Luftausrüstung (5) geeignet ist, ein Druckentlastungsventil (7), das in der Luftzufuhrleitung angebracht und ausgestaltet ist, die Luftzufuhr zu der Ausrüstung im Falle eines von dem Drucksensor erfassten Überdrucks zu sperren, worin das Druckentlastungsventil umfasst:
- einen Ventilkörper (11) mit einem Lufteinlass (11a), einem Luftauslass (11b) und einem Luftzirkulationskanal (11c), der zwischen dem Lufteinlass (11a) und dem Luftauslass (11b) angeordnet ist und sich in einer Richtung, die als Längsrichtung (10) bezeichnet wird, erstreckt,
- ein Verschlusselement (121, 122), das schwenkbar in dem Luftzirkulationskanal (11c) um eine Schwenkachse zwischen einer offenen Position, in der Luft frei von dem Lufteinlass (11a) zu dem Luftauslass (11b) zirkulieren kann, und einer geschlossenen Position, in der das Verschlusselement eine Oberfläche aufweist, die als stromaufwärts gelegene Fläche (121a, 122a) bezeichnet wird und sich über den Zirkulationskanal erstreckt, um jegliche Luftzirkulation zu dem Luftauslass (11b) zu verhindern, angebracht ist;
**dadurch gekennzeichnet, dass** das Druckentlastungsventil zudem umfasst:
- mindestens einen durch den Ventilkörper (11) verlaufenden Luftauslasskanal (13), der ausgestaltet ist, dass er, wenn sich das Verschlusselement in der geschlossenen Position befindet, spontan eine Fluidverbindung zwischen mindestens einer Luftauslassöffnung (15), die an der stromaufwärts gelegenen Fläche des Verschlusselements ausgebildet ist, und mindestens einer Luftablassöffnung (19), die zur Außenseite des Luftzirkulationskanals führt, herstellt.

2. Entlüftungssystem nach Anspruch 1, **dadurch gekennzeichnet, dass** mindestens ein Auslasskanal (13) in dem Verschlusselement (121, 122) vorgesehen ist.

3. Entlüftungssystem nach Anspruch 1 oder 2, **dadurch gekennzeichnet, dass** mindestens ein Auslasskanal (13) einen stromaufwärts gelegenen Teil (13a), der von der Auslassöffnung (15) versorgt wird, einen stromabwärts gelegenen Teil (13c), der angepasst ist, mit der Luftablassöffnung in Fluidverbindung gebracht zu werden, wenn sich das Verschlusselement in der geschlossenen Stellung befindet, und einen Zwischenteil (13b) umfasst, der den stromaufwärts gelegenen und den stromabwärts gelegenen Teil miteinander verbindet.

4. Entlüftungssystem nach Anspruch 3, **dadurch gekennzeichnet, dass** das Verschlusselement (121) eine sich entlang der Schwenkachse erstreckende Schwenkwelle (14) umfasst, die ausgestaltet ist, durch ein Betätigungsventil schwenkbar angetrieben zu werden, um sich von der offenen Position in die geschlossene Position zu bewegen, wobei die Schwenkwelle (14) die stromaufwärts, dazwischen und stromabwärts gelegenen Teile des Auslasskanals aufnimmt.

5. Entlüftungssystem nach Anspruch 4, **dadurch gekennzeichnet, dass** die Schwenkwelle (14) und der Zwischenabschnitt sich radial erstrecken.

6. Entlüftungssystem nach einem der Ansprüche 1 bis 5, **dadurch gekennzeichnet, dass** die Entlüftungsöffnung (19) von einem Auslassnippel (20) getragen wird, der ausgestaltet ist, mit einer Entlüftungsleitung verbunden zu werden, die es ermöglicht, Luft in einem Abstand von dem Ventil zu entlüften.

7. Entlüftungssystem nach Anspruch 6, **dadurch gekennzeichnet, dass** sich der Auslassnippel (20) in einer Richtung senkrecht zur Schwenkachse des Verschlusselements oder in einer Richtung parallel zur Schwenkachse des Verschlusselements erstreckt.

8. Entlüftungssystem nach Anspruch 6 oder Anspruch 7, **dadurch gekennzeichnet, dass** der Auslassnippel (20) ferner eine dynamische Dichtungseinrichtung umfasst, die ausgestaltet ist, Luftlecks zu begrenzen, wenn sich das Verschlusselement in der offenen Position befindet.

9. Entlüftungssystem nach Anspruch 8, **dadurch gekennzeichnet, dass** die dynamische Dichtungsvorrichtung einen rohrförmigen Stopfen (16) umfasst, der sich innerhalb des Auslassnippels (20) erstreckt, der gleitend auf einem O-Ring (17) angebracht ist und durch eine Feder (18) in Position gegen das Verschlusselement gehalten wird.

10. Entlüftungssystem nach einem der Ansprüche 1 bis 9, **dadurch gekennzeichnet, dass** das Druckentlastungsventil ein Klappenventil oder ein Stopfenventil ist.

## Claims

1. Air bleed system (1) comprising an air bleed port (2) provided on an engine (3) of an aircraft, an air supply pipe (4) designed to be in fluid communication with an air equipment (5) of the aircraft, a pressure sensor (6) suitable for measuring the air pressure in said supply pipe (4) and/or in said air equipment (5), a pressure relief valve (7) mounted in said air supply pipe and configured to block the air supply to said equipment in the event of overpressure detected by said pressure sensor,
said pressure relief valve comprising:
- a valve body (11) comprising an air inlet (11a), an air outlet (11b) and an air circulation duct (11c) which is arranged between the air inlet (11a) and the air outlet (11b) and extends in a direction, called the longitudinal direction (10),
- a closure member (121, 122) pivotally mounted in said air circulation duct (11c) about a pivot axis, between an open position in which air can freely circulate from said air inlet (11a) toward said air outlet (11b), and a closed position in which said closure member has a surface, called the upstream face (121a, 122a) which extends across the circulation duct so as to prevent any air circulation toward said air outlet (11b),
**characterized in that** said pressure relief valve further comprises :
- at least one air discharge channel (13) passing through said valve body (11) configured to spontaneously fluidically connect, when said closure member is in said closed position, at least one air discharge opening (15) formed on said upstream face of said closure member and at least one air evacuation opening (19) which opens to the outside of the air circulation duct.

2. Air bleed system according to claim 1, **characterized in that** at least one discharge channel (13) is provided in said closure member (121, 122).

3. Air bleed system according to either claim 1 or claim 2, **characterized in that** at least one discharge channel (13) comprises an upstream part (13a) supplied by said discharge opening (15), a downstream part (13c) adapted to be able to be placed in fluid communication with said air evacuation opening when said closure member is in said closed position, and an intermediate part (13b) connecting said upstream and downstream parts.

4. Air bleed system according to claim 3, **characterized in that** said closure member (121) comprises a pivot shaft (14) extending along said pivot axis, designed to be pivotally driven by an actuator valve in order to move from the open position to the closed position, said pivot shaft (14) accommodating said upstream, intermediate and downstream parts of said discharge channel.

5. Air bleed system according to claim 4, **characterized in that** said pivot shaft (14) and said intermediate section extend radially.

6. Air bleed system according to any of claims 1 to 5, **characterized in that** said air evacuation opening (19) is carried by a discharge nipple (20) configured to be able to be connected to an air evacuation duct allowing air to be evacuated at a distance from said valve.

7. Air bleed system according to claim 6, **characterized in that** said discharge nipple (20) extends in a direction perpendicular to said pivot axis of the closure member or in a direction parallel to the pivot axis of the closure member.

8. Air bleed system according to either claim 6 or claim 7, **characterized in that** said discharge nipple (20) further comprises a dynamic sealing device configured to limit air leaks when said closure member is in said open position.

9. Air bleed system according to claim 8, **characterized in that** said dynamic sealing device comprises a tubular plug (16) extending inside said discharge nipple (20), slidably mounted on an O-ring (17) and held in position against said closure member by a spring (18).

10. Air bleed system according to any of claims 1 to 9, **characterized in that** said pressure relief valve is a butterfly valve or a plug valve.
